# EUROPEAN PATENT SPECIFICATION

(11) **EP 1 797 157 B1**
(45) Date of publication and mention of the grant of the patent: **17.09.2008**
(21) Application number: 05801299.8
(22) Date of filing: 13.09.2005
(51) Int. Cl.: C09K 8/72

(54) **SELECTIVE FRACTURE FACE DISSOLUTION**
SELEKTIVE FRAKTURFLÄCHENAUFLÖSUNG
DISSOLUTION SELECTIVE DE FACE DE FRACTURE

(30) Priority: 15.09.2004 US 941384
(43) Date of publication of application: 20.06.2007
(73) Proprietor: Services Pétroliers Schlumberger, 75007 Paris (FR); Schlumberger Holdings Limited, Tortola (VG); Schlumberger Technology B.V., 2514 JG The Hague (NL)
(72) Inventor: BROWN, Ernest, J., Katy, TX 77450 (US); STILL, John, W., Richmond, TX 77469 (US)
(74) Representative: Stoole, Brian David
(86) International application number: PCT/IB2005/053001
(87) International publication number: WO 2006/030383

(56) References cited:
- WO-A-20/04038176
- US-A- 4 267 887
- US-A1- 2004 106 525
- US-A1- 2004 152 601

## Description

### Background of the Invention

The invention relates to stimulation of wells penetrating subterranean formations. More particularly it relates to acid fracturing; most particularly it relates to reducing contact of strong acid with components of the wellbore and with the near-wellbore region of the formation and to methods of etching the fracture faces so that etching is minimal in some regions but a conductive path from the fracture tip to the wellbore is nonetheless created.

In acid fracturing, acid is placed in the fracture, preferably along the entire distance from the fracture tip to the wellbore, so that it reacts with the face of the fracture to etch differential flow paths that a) create disparities so that the opposing fracture faces do not match up when the fracture pressure is released and so the fracture does not close completely, and b) provide flow paths for produced fluid along the fracture faces from distant portions of the fracture to the wellbore (or flow paths for injecting fluids into the formation). Normally, the acid is placed in the desired location by forming an acidic fluid on the surface and pumping the acidic fluid from the surface and down the wellbore above fracture pressure. In the absence of other influences, flow channels are formed as a result of uneven reaction with the rock surface (differential etching), typically caused by localized heterogeneities in the mineralogical make up (lithology) of the formation. There are generally three major problems encountered during this normal procedure.

First, in the pumping operation the acid is in contact with iron-containing components of the wellbore such as casing, liner, coiled tubing, etc. Strong acids are corrosive to such materials, especially at high temperature. This means that corrosion inhibitors must be added to the fluid being injected in order not to limit the amount of acid, and/or the time of exposure, that can be used during injection of the acid. Furthermore, acid corrosion creates iron compounds such as iron chlorides. These iron compounds may precipitate, especially if sulfur or sulfides are present, and may interfere with the stability or effectiveness of other components of the fluid, thus requiring addition of iron control agents or iron sequestering agents to the fluid.

Second, if, as is usually the case, the intention is to use the acid to treat parts of the formation at a significant distance away from the wellbore (usually in addition to treating parts of the formation nearer the wellbore), this may be very difficult to accomplish because if an acid is injected from the surface down a wellbore and into contact with the formation, the acid will naturally react with the first reactive material with which it comes into contact. Depending upon the nature of the well and the nature of the treatment, this first-contacted and/or first-reacted material may be a filtercake, may be the formation surface forming the wall of an uncased (or openhole) wellbore, may be the near-wellbore formation, or may be a portion of the formation that has the highest permeability to the fluid, or is in fluid contact with a portion of the formation that has the highest permeability to the fluid. In many cases, this may not be the formation (matrix) material with which the operator wants the acid to react. At best this may be wasteful of acid; at worst this may make the treatment ineffective or even harmful. In general, the higher the temperature the more reactive is the acid and the greater are the problems. This is usually a severe problem when at least some of the formation is carbonate, which is typically very reactive towards acid.

Third, even when the acid has successfully been contacted with the desired region of the fracture face, there is sometimes a tendency for the acid to react evenly with the fracture faces, especially in localized regions, so that conductive channels along the fracture faces are not created by differential etching in such regions after fracture closure. This is most likely to occur when the rate of delivery of the acid to the reactive site (e.g. the fluid injection rate) is much lower than the rate of reaction of the acid. Avoiding this problem may require careful monitoring and control of acid strength and injection rates.

There are several ways in which operators have dealt with these problems in the past. One method is to segregate the acid from the material with which reaction is not desired (such as wellbore metals or a near-wellbore reactive region of the formation). This is done, for example, by a) placing the acid in the internal phase of an emulsion (so-called "emulsified acid") and then either causing or allowing the emulsion to invert at the time and place where reaction is desired or allowing slow transport of the acid across the phase boundaries, or b) encapsulating the acid, for example by the method described in U.S. Patent No. 6,207,620, and then releasing the acid when and where it is needed. There are problems with these methods. Although emulsified acids are popular and effective, they require additional additives and specialized equipment and expertise, and may be difficult to control. A problem with the encapsulated acids is that the location and timing of release of the acid may be difficult to control. The release is brought about by either physical or chemical degradation of the coating. Physical damage to the encapsulating material, or incomplete or inadequate coating during manufacture, could cause premature release of the acid.

A second method is to delay formation of the acid. Templeton, et al., in "Higher pH Acid Stimulation Systems", SPE paper 7892, 1979, described the hydrolysis of esters such as methyl formate and methyl acetate as *in situ* acid generators in the oilfield. They also described the reaction of ammonium monochloroacetic acid with water to generate glycolic acid and ammonium chloride in the oilfield. However, these acid precursors are liquids, and these reactions may take place rapidly as soon as the acid precursors contact water. U.S. Application No. 2004/0152604 A1 or PCT application WO 2004/038176 discloses an acid fracturing method, in which the acid is generated in the fracture by hydrolysis of a solid acid-precursor such as lactide, polylactide acid, glycolidr, polyglycolic acid or derivatives. A third method of encouraging differential etching is to fracture with a viscous non-acidic fluid and then to cause a less-viscous acid to finger through the viscous fluid.

There is a need for a method for creating highly conductive fractures along as much of the fracture length as possible without employing a complicated job design and while limiting the volume of acid needed and minimizing contact between strong acid and components of the wellbore and the near-wellbore region of the formation.

### Summary of Embodiments of the Invention

A method is given for creating a fracture in a subterranean formation penetrated by a wellbore; the method includes injecting a fluid above fracture pressure that contains particles of a solid acid-precursor, and particles of an inert solid that can conform to one or both faces of the fracture and that can inhibit the reaction of acid with the formation where the fracture face or faces are contacted, and allowing at least a portion of the solid acid-precursor to hydrolyze. The fluid may optionally contain a viscosifying agent. The solid acid-precursor is selected from lactide, glycolide, polylactic acid, polyglycolic acid, copolymers of polylactic acid and polyglycolic acid, copolymers of glycolic acid with other hydroxy-, carboxylic acid-, or hydroxycarboxylic acid-containing moieties, copolymers of lactic acid with other hydroxy-, carboxylic acid-, or hydroxycarboxylic acid-containing moieties, polymers of 3-hydroxypropionic acid, and mixtures of those materials. Particularly suitable solid acid-precursors are polylactic acid and polyglycolic acid. The solid acid-precursor particles and the inert particles have shapes selected from beads, ribbons, platelets, fibers and mixtures, and may have the same shape or different shapes and sizes. The solid acid precursor may be coated or encapsulated to delay dissolution/hydrolysis. Optionally, the inert solid particles degrade after the dissolution agent reacts. Examples of suitable inert solid particles are plastic, glass, polyacrylamide, phenol formaldehyde polymer, nylon, wax, natural rubber, synthetic rubber, vermiculite, organic seeds, organic shells, mica, cellophane flakes, starch, rock salt, benzoic acid, metals, naphthalene and mixtures thereof.

In another embodiment, the fluid may additionally contain an agent capable of dissolving at least one component of said formation. Examples of this dissolution agent are hydrochloric acid, formic acid, acetic acid, lactic acid, glycolic acid, sulfamic acid, malic acid, tartaric acid, maleic acid, methylsulfamic acid, chloroacetic acid, aminopolycarboxylic acids, 3-hydroxypropionic acid, polyaminopolycarboxylic acids, salts thereof and mixtures thereof, bisulfate salts, as well as latent or retarded acid systems including emulsified, encapsulated, gelled, or chemically retarded (film-barrier) forming acids.

Another embodiment is a method of creating a fracture in a subterranean formation penetrate by a wellbore by injecting, above fracture pressure, a fluid that contains particles of two or more than two solid acid-precursors that hydrolyze and dissolve to generate acid at different rates; the solid acid-precursor particles that are slower to hydrolyze and dissolve can conform to one or both faces of the fracture and inhibit reaction of acid with the formation where they conform to a fracture face. The fluid may contain a viscosifying agent. The two or more than two solid acid-precursors may have two or more than two different compositions or two or more than two different sizes or surface-to-volume ratios. One or both of the solid acid precursors may be coated or encapsulated to delay dissolution/hydrolysis. In yet another embodiment, this fluid may also contain inert solid particles that can conform to one or both faces of the fracture and inhibit reaction of acid with the formation where they conform to a fracture face. In yet another embodiment, this fluid may also contain an agent capable of dissolving at least one component of the formation, for example hydrochloric acid, formic acid, acetic acid, lactic acid, glycolic acid, sulfamic acid, malic acid, tartaric acid, maleic acid, methylsulfamic acid, chloroacetic acid, aminopolycarboxylic acids, 3-hydroxypropionic acid, polyaminopolycarboxylic acids, and salts and/or mixtures of these acids.

One more embodiment is a composition containing solid acid-precursor particles, and inert solid particles that can conform to one or both faces of a fracture in a subterranean formation and inhibit reaction of acid with the formation where they conform to a fracture face. Another embodiment is a composition containing particles of two or more than two solid acid-precursors that hydrolyze and dissolve to generate acid at different rates.

### Brief Description of the Drawings

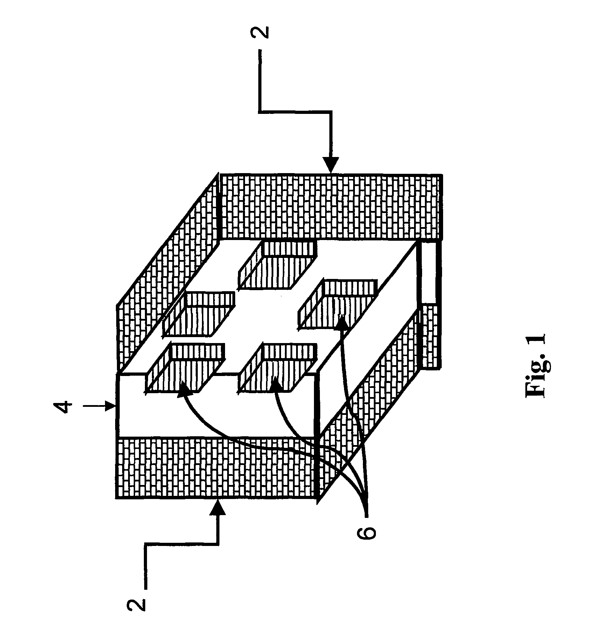

Figure 1 shows a schematic of a fracture that is created with an inert masking material present.

### Detailed Description of Embodiments of the Invention

The new acid fracturing method uses solid acid-precursors as the main source of acid, optionally as the only source of a formation-dissolution agent, and optionally in the presence of solid inert particles that act as masking agents to inhibit dissolution of some of one or both of the fracture faces. The method provides delayed acid release and enhanced differential etching of the fracture faces. The method of the invention is particularly useful a) under circumstances of high closure stress, b) if the formation has low compressive strength or c) if the formation lithology is very homogenous. It is particularly useful in acid fracturing of carbonates, in which the acid commonly reacts too readily with the formation, so that mass transport of acid to the reaction point becomes rate limiting, resulting in too much reaction in some localized areas and little or no reaction elsewhere. The remaining discussion will be primarily for carbonates. The method can be used, but is less useful, for treating sandstones, in which the acid typically reacts too slowly, so that the reaction rate is rate limiting, resulting in too even reaction and inadequate differential etching.

Excellent solid acid-precursors are the solid cyclic dimers, or solid polymers, of certain organic acids, that hydrolyze under known and controllable conditions of temperature, time and pH to form the organic acids. One example of a suitable solid acid-precursor is the solid cyclic dimer of lactic acid (known as "lactide"), which has a melting point of 95 to 125 °C, (depending upon the optical activity). Another is a polymer of lactic acid, (sometimes called a polylactic acid (or "PLA"), or a polylactate, or a polylactide). Another example is the solid cyclic dimer of glycolic acid (known as "glycolide"), which has a melting point of about 86 °C. Yet another example is a polymer of glycolic acid (hydroxyacetic acid), also known as polyglycolic acid ("PGA"), or polyglycolide. Another example is a copolymer of lactic acid and glycolic acid. These polymers and copolymers are polyesters.

Cargill Dow, Minnetonka, MN, USA, produces the solid cyclic lactic acid dimer called "lactide" and from it produces lactic acid polymers, or polylactates, with varying molecular weights and degrees of crystallinity, under the generic trade name NATUREWORKS^{™} PLA. The PLA's currently available from Cargill Dow have molecular weights of up to about 100,000, although any polylactide (made by any process by any manufacturer) and any molecular weight material of any degree of crystallinity may be used in the embodiments of the Invention. The PLA polymers are solids at room temperature and are hydrolyzed by water to form lactic acid. Those available from Cargill Dow typically have crystalline melt temperatures of from about 120 to about 170 °C, but others are obtainable. Poly(d,l-lactide) is available from Bio-Invigor, Beijing and Taiwan, with molecular weights of up to 500,000. Bio-Invigor also supplies polyglycolic acid (also known as polyglycolide) and various copolymers of lactic acid and glycolic acid, often called "polyglactin" or poly(lactide-co-glycolide). The rates of the hydrolysis reactions of all these materials are governed by the molecular weight, the crystallinity (the ratio of crystalline to amorphous material), the physical form (size and shape of the solid), and in the case of polylactide, the amounts of the two optical isomers. (The naturally occurring 1-lactide forms partially crystalline polymers; synthetic dl-lactide forms amorphous polymers.) Amorphous regions are more susceptible to hydrolysis than crystalline regions. Lower molecular weight, less crystallinity and greater surface-to-mass ratio all result in faster hydrolysis. Hydrolysis is accelerated by increasing the temperature, by adding acid or base, or by adding a material that reacts with the hydrolysis product(s).

Homopolymers can be more crystalline; copolymers tend to be amorphous unless they are block copolymers. The extent of the crystallinity can be controlled by the manufacturing method for homopolymers and by the manufacturing method and the ratio and distribution of lactide and glycolide for the copolymers. Polyglycolide can be made in a porous form. Some of the polymers dissolve very slowly in water before they hydrolyze.

Other materials suitable as solid acid-precursors are those polymers of hydroxyacetic acid (glycolic acid) with itself or other hydroxy-, carboxylic acid-, or hydroxycarboxylic acid-containing moieties described in U.S. Patent Nos. 4,848,467; 4,957,165; and 4,986,355.

The solid acid-precursors may be manufactured in various solid shapes, including, but not limited to fibers, beads, films, ribbons and platelets. The solid acid-precursors may be coated to slow the hydrolysis. Suitable coatings include polycaprolate (a copolymer of glycolide and epsilon-caprolactone), and calcium stearate, both of which are hydrophobic. Polycaprolate itself slowly hydrolyzes. Generating a hydrophobic layer on the surface of the solid acid-precursors by any means delays the hydrolysis. Note that coating here may refer to encapsulation or simply to changing the surface by chemical reaction or by forming or adding a thin film of another material. Another suitable method of delaying the hydrolysis of the solid acid-precursor, and the release of acid, is to suspend the solid acid-precursor, optionally with a hydrophobic coating, in an oil or in the oil phase of an emulsion. The hydrolysis and acid release do not occur until water contacts the solid acid-precursor. Methods used to delay acid generation may be used in conjunction with inclusion of solid acid-reactive material to accelerate acid generation because it may be desirable to delay acid generation but then to have acid generated rapidly.

Although the term "acid" is generally used here to describe agents capable of dissolving components of a formation, it is to be understood that other reactive fluids (such as chelating agents, for example aminocarboxylic acids, polyaminopolycarboxylic acids, etc.) may also be used, and the term "acid" is intended to include such materials when it refers to a dissolution agent or to a component of a dissolution agent, even if the pH is 7 or above. (In the term "acid-precursor" however, or when referring to the hydrolysis/dissolution product generated by an acid-precursor, "acid" means a carboxylic acid (such as lactic acid or glycolic acid)). The method of the invention may in fact be used with any dissolution agent (including those that are delayed, or retarded (gelled, or emulsified)) for any subterranean formation lithology, provided only that a masking agent (see below) is chosen that is suitably inert in the dissolution agent (and does not excessively interfere with its efficacy). The method is particularly suitable for use with expensive dissolution agents because the method increases the dissolution efficiency and therefore reduces the amount of dissolution agent needed. On the other hand, the need for delay or retardation is reduced with the present method.

In embodiments of the invention, dissolving systems are not allowed to react with some portions of the fracture face, while still reacting with, and etching, other portions of the fracture face. During the treatment, portions of the fracture face are protected from acid dissolution by placing a barrier or mask over a portion of the fracture face. This process of masking the formation (similar to the process performed during photolithography) protects a portion of the fracture face from dissolution and ultimately leaves behind a supporting "pillar" that acts something like the proppant in hydraulic fracturing and helps to keep the fracture open. The dissolving system removes some rock from any portion of the fracture face that is not protected by the masking material. With a balance of masked and un-masked areas along the fracture face, a highly conductive pathway is created using the supporting pillars to hold open the fracture in a method analogous to a "room and pillar " mine. This results in a conductive pathway even if the fluid flow and reaction rates are in one of the regimes in which the dissolution of the fracture face would otherwise be comparatively uniform. The masking particles also serve as a fluid loss additive to reduce the volume of fracturing/dissolving fluid needed.

Typically in fracturing treatments, injection of a fluid ahead of the main treatment fluid is employed to create width. A pad is generally used in the present invention to ensure that the fracture is wide enough for the solid masking agent to enter, but optionally the operator may omit the pad stage and put the masking material straight into the acid provided that the acid has sufficient viscosity to create width and to suspend the masking material. The pad may be any viscous fluid, as examples polymer, crosslinked polymer, VES, and foam, and may itself comprise a formation dissolving material and or a clay control agent.

In one embodiment, two different solid acid-precursors are used that hydrolyze and dissolve at different rates. Particles of these materials are suspended in the fracturing fluid, optionally with a viscosifying agent, and injected into the formation above fracture pressure. In the early stages of the treatment, one of these two materials generates acid while the other primarily acts as an inert masking material. In the later stages, the second material also generates acid. The difference in reaction rates may be controlled in many ways. The two materials may be chemically different; one may be coated with a hydrolysis-inhibiting material; one may include a hydrolysis-accelerating material; the two may be made in different sizes and/or shapes, thus having different surface areas exposed to the aqueous fracture fluid; or combinations of these methods may be used.

As an example, polylactic acid (PLA) fibers (for example having a diameter of about 12 µm and a length of about 6 mm and injected at a concentration of about 50 lbs/1000 gal (about 6 g/L)) and beads (for example having a diameter of about 800 µm and injected at a concentration of about 0.5 kg/L (about 4 ppa) may be injected together. The fibers have a propensity to line up with the flow and so when the flow stops they tend to be aligned in the direction in which future flow is desired: from the fracture tip to the wellbore. The fibers also tend to cause the beads to aggregate and be concentrated in some areas of the fracture more than in others. After the injection, the fibers hydrolyze/dissolve more rapidly because they have a greater surface area to volume ratio and the result is an etching pattern of channels aligned from the fracture tip to the wellbore. Later, the beads hydrolyze/dissolve, leaving localized areas of greater etching. Other shape combinations may be used, or simply different sizes of the same shape, and uneven etching results. In this embodiment, the total amount of solid acid-precursor or mixture used per unit area of fracture to be created, depends upon, among other factors, the temperature and the amount of acid needed. The preferred concentration range is between about 0.42 and about 5 ppg (between about 0.05 and about 0.6 kg/L). The most preferred range is between about 0.83 and about 2.5 ppg (between about 0.1 and about 0.3 kg/L). Care must be exercised to prevent bridging (screening out) of any solid material unless it is desired at some point; one skilled in the art will know that for a given particle shape, flow rate, rock properties, etc. there is a concentration, that can be calculated by one of ordinary skill in the art, above which bridging may occur.

Accelerants and inhibitors for the hydrolysis/dissolution of solid acid-precursors were described in U. S. Patent Publication No. 2004/0152601. Accelerating agents react readily with the solid acid-precursor and cause the removal of a small amount of material from the solid acid-precursor surface. Not to be limited by theory, but it is believed that when the intact surface of the solid acid-precursor is disrupted by the removal of material, subsequent dissolution of additional material from that surface is easier. One solid acid-precursor may be an accelerant for another; for example, PGA accelerates the hydrolysis of PLA.

Examples of accelerants include, but are not limited to, magnesium hydroxide, magnesium carbonate, dolomite (magnesium calcium carbonate), calcium carbonate, aluminum hydroxide, calcium oxalate, calcium phosphate, aluminum metaphosphate, sodium zinc potassium polyphosphate glass, and sodium calcium magnesium polyphosphate glass. The dissolution of solid acid-precursors in acid fracturing may also be accelerated by the addition of certain soluble liquid additives. These accelerants may be acids, bases, or sources of acids or bases. These are particularly valuable at low temperatures (for example below about 135 °C), at which the solid acid-precursors hydrolyze slowly, relative to the time an operator would like to put a well on production after a fracturing treatment. Non-limiting examples of such soluble liquid additives that hydrolyze to release organic acids are esters (including cyclic esters), diesters, anhydrides, lactones and amides. A compound of this type, and the proper amount, that hydrolyzes at the appropriate rate for the temperature of the formation and the pH of the fracturing fluid is readily identified for a given treatment by simple laboratory hydrolysis experiments. Other suitable soluble liquid additives are simple bases. (They are termed "liquids" because in practice it is simpler and safer to add them to the fracturing fluid as aqueous solutions rather than as solids.) Suitable bases are sodium hydroxide, potassium hydroxide, and ammonium hydroxide. Other suitable soluble liquid additives are alkoxides, water-soluble carbonates and bicarbonates, alcohols such as but not limited to methanol and ethanol, alkanol amines and organic amines such monoethanol amine and methyl amine. Other suitable soluble liquid additives are acids, such as but not limited to hydrochloric acid, hydrofluoric acid, ammonium bifluoride, formic acid, acetic acid, lactic acid, glycolic acid, aminopolycarboxylic acids (such as but not limited to hydroxyethyliminodiacetic acid), polyaminopolycarboxylic acids (such as but not limited to hydroxyethylethylenediaminetriacetic acid), salts -- including partial salts -- of the organic acids (for example, ammonium, potassium or sodium salts), and mixtures of these acids or salts. The organic acids may be used as their salts. When corrosive acid might contact corrodible metal, corrosion inhibitors are added. Some solid acid-precursors, such as PLA, may be obtained from suppliers with small amounts of the corresponding free acids (in this case lactic acid) trapped in them in manufacture. Thus a particle of PLA cointaining lactic acid hydrolyzes/dissolves more rapidly than an otherwise identical particle not containing lactic acid.

Another important embodiment is the use of particles of solid acid-precursor with particles of an inert masking material other than another solid acid-precursor. The masking material will be termed "inert" if it is not dissolved by the formation-dissolving agent (or by other later-injected fluids or by formation fluids) for a time longer than the time during which the formation dissolving fluid is actively dissolving the formation. The masking material will be termed "permanently inert" if it is not dissolved by the formation dissolving agent (or by other later-injected fluids or by formation fluids) for a time at least as long as the fracture is useful (for example is part of an injection or production flow path), without remediation. The term "inert" will be used here to mean both "inert" and "permanently inert" unless specified otherwise. The masked, unreacted, localities are truly pillars if they extend entirely across the width of the resulting fracture. This is the case as long as not all of the mask has dissolved and some is trapped between the fracture faces or if the fracture faces move toward one another after the mask is gone but the mask had already resulted in less reaction of the fracture faces where the mask had been located. If most or all of the mask dissolves but the fracture faces do not move toward one another after the mask dissolves (the motion has already occurred), the portion of the fracture face where the mask had been is narrower than portions that had not been masked, but that portion still contributes to the flow path. Whether an inert or permanently inert material is used depends upon many factors, including but not limited to the costs and availability of masking materials, how hard or soft the formation is, how hard or soft the masking material is, and the likelihood of fines migration.

There are a number of particle shapes that are used in the invention for inert materials, for example, but not limited to beads, fibers, platelets or ribbons, and other shapes. Particle sizes may be uniform or may be broadly heterogeneous. Mixtures of shapes and sizes may be used. Mixtures of inert particles and permanently inert particles may be used.

In one embodiment, particularly useful for creating supporting pillars in carbonates, pillars used to support an open etched fracture are created by pumping soft deformable particles in a retarded acid. These deformable particles become a masking agent as the fracture closes upon them. The masking material covers a portion of the fracture faces and prevents the acid from reacting with this portion of the fracture faces. The un-reacted fracture faces create a small pillar that is capable of holding open the etched fracture. The open area of the fracture is nearly infinitely conductive.

In one embodiment, placement of the masking material is achieved early in the etching process or even before the etching process begins. If the acid (or formation dissolving agent) begins to react before the masking takes place or is completed then the effectiveness of the final masking process may be reduced and the open etched width may be reduced because some of the dissolution agent has been consumed in more uniform removal of some of the rock during the initial dissolution. Therefore, placement of the masking material with a relatively unreactive dissolution agent, such as a highly retarded acid, or an acid that is generated in-situ (*e.g*. delayed) may be advantageous. Placement of the mask before dissolution may not always be necessary; for example, it may not be necessary in the near wellbore region of a fracture where the fracture could contact a large excess of acid during a fracturing operation. Some dissolution may occur before the placement of the mask, but some dissolution must occur after the placement of the mask.

Inert particles may be provided in various shapes, including, but not limited to fibers, beads, films, ribbons, platelets and mixtures of these shapes. If a mixture is used, the particle sizes of the individual components of the mixture may be the same or different. Almost any particle size may be used. Governing factors include a) the capability of equipment, b) the width of the fracture generated, and c) the desired rate and time of formation dissolution. Preferred sizes are approximately those of proppants and fluid loss additives since operators have the equipment and experience suitable for those sizes.

In one embodiment, excellent particles used to create the masking area are soft deformable materials such as (but not limited to) soft plastic, wax, natural or synthetic rubber, vermiculite, organic seeds or shells, polyacrylamide, phenol formaldehyde polymer, nylon, starch, benzoic acid, metals or naphthalene. These materials conform to one or both fracture faces after they deform, even if they are initially in the form of beads. The deformation of the masking material improves the efficiency of the masking process by creating a larger area of coverage upon fracture closure. The pressure of fracture closure squeezes the deformable particle into a flattened pancake material that ultimately covers and protects a larger area of the fracture face. Such soft deformable masking materials are often not permanently inert and tend to degrade and completely break down overtime. This minimizes plugging or impairment of the fracture flow capacity after a job has been completed.

Sheet materials or particles having a very large aspect ratio (*i.e*. mica, cellophane flakes, etc.) are also effective because they cover a relatively large area of the fracture face. If these materials are much less thick than the fracture is wide, they are effective only on one face of the fracture and therefore provide only roughly half of the total supported fracture width. For these materials to conform to a fracture face, either they are flexible or the particles have length and width dimensions that are small relative to the initial fracture face asperity. Operationally, materials having this shape are difficult to use due to placement issues during pumping.

Particles of non-deformable materials (such as glass, mica and salts) are in shapes that allow large areas of the particles to conform to the fracture faces. Appropriate shapes include sheets and flakes. Beads of non-deformable materials, such as conventional sand and ceramic proppants, may not be as suitable because they contact very little fracture face area. (Normally proppant is not used in acid fracturing, although it can be and such use would be within the scope of the invention.)

In another embodiment, in order to create large pillar structures, it may be desirable to pump slugs of masking particles with the acid so as to have the masking particles create large supporting pillars. That is, the concentration of inert masking particles in the fracturing fluid may be varied during the treatment and may even be zero during part of the treatment. Similarly, the ratio of solid acid-precursor particles and inert particles may be varied in order to create large pillar structures.

Treatments are optionally conducted as cost-minimization water fracs in which a low concentration, for example about 0.05 kg/L, of inert material is pumped at a high rate, for example up to about 3500 L/min or more, with little or no viscosifier. Optionally they are also conducted, as are more conventional fracturing treatments, with viscosifiers and higher concentrations of inert masking particles, for example up to about 0.6 kg/L, of inert material or mixture. The viscosifiers are the polymers or viscoelastic surfactants typically used in fracturing, frac-packing and gravel packing. The lower density of many types of inert particles, relative to the density of conventional proppants, is an advantage since the amount of viscosifier needed is less. Acid usually also acts as a breaker for the viscosifier, thus enhancing cleanup and offsetting any damage that might otherwise be done by the viscosifier. (Acids are known to damage or destroy many synthetic polymers and biopolymers used to viscosify drilling, completion and stimulation fluids. Acids are also known to damage or destroy either the micelle/vesicle structures formed by many viscoelastic surfactants or, in some cases, the surfactants themselves.)

The amount of inert particles used per unit area of fracture to be created depends upon, among other factors, the mechanical properties of the formation, the width of the etched fracture, the width of the hydraulic fracture, the viscosity of the carrier fluid, and the density of the particles. With a balance of masked and un-masked areas along one or both fracture faces, a highly conductive pathway is created using the supporting pillars to hold open the fracture in a method analogous to a "room and pillar " mine. The preferred concentration range is between about 0.42 and about 5 ppg (between about 0.05 and about 0.6 kg/L). The most preferred range is between about 0.83 and about 2.5 ppg (between about 0.1 and about 0.3 kg/L). Care must be exercised to prevent bridging (screening out) of any solid material unless it is desired at some point; one skilled in the art will know that for a given particle shape, flow rate, rock properties, etc. there is a concentration, that can be calculated by one of ordinary skill in the art, above which bridging may occur.

The method of the invention may be used with any dissolution agent for any lithology, but is most advantageously used in carbonates. By non-limiting example, hydrochloric acid, acetic acid, mixtures of these, and the like are very commonly used; chelating agents such as hydroxyethylethylenediamine triacetic acid (HEDTA) and hydroxyethyliminodiacetic acid (HEIDA) may also be used, especially when acidified with hydrochloric acid.

U. S. Patent Application Publication No. 2003/0104950, describes a particularly effective dissolution agent, that may be used in the present invention, that is made up of either or both of a) an acid selected from one or more of hydrochloric, sulfuric, phosphoric, hydrofluoric, formic, acetic, boric, citric, malic, tartaric, and maleic acids and mixtures of those acids; and b) an aminopolycarboxylic acid chelating agent selected from one or more of ethylenediamine tetraacetic acid (EDTA), hydroxyethylethylenediamine triacetic acid (HEDTA), diethylenetriamine pentaacetic acid (DTPA), hydroxyethyliminodiacetic acid (HEIDA), nitrilotriacetic acid (NTA), and their K, Na, NH₄ or amine salts. Hydrofluoric acid or hydrogen fluoride precursors are not usually used, but if fluoride is present, the formation is preferably preflushed, as is well known, to prevent precipitation of fluorides unless there are large amounts of chelating agents in the dissolution agent.

Acid fracturing is typically undertaken to provide improved flow paths for the production of hydrocarbons, but the method is equally useful in wells for the production of other fluids (such as water or helium) or for injection wells (for example for enhanced oil recovery or for disposal).

**Example 1:** Figure 1 shows a schematic of how a fracture would appear if created by the method of the invention. The fracture [4] in the formation [2] contains regions [6] that are not open to fluid flow. These regions are where the inert or reactive masking material is trapped when the fracture closes. The fracture face is protected from the formation dissolving agent at those locations.

### Example 2:

A) The following is a representative job design that would be used for a typical treatment with a mixture of solid acid precursor fibers and solid acid precursor beads. The base fluid is 2.4 g/L of zirconium crosslinked CMHPG.

| **Stage** | **Rate** | **Base Fluid** | **Stage Volume** | **Solid Acid Precursor Beads** | **Solid Acid Precursor Beads** | **Solid Acid Precursor Fiber** | **Solid Acid Precursor Fiber** |
|---|---|---|---|---|---|---|---|
| | **kL/min** | | **kL** | **kg/L** | **kg** | **g/L** | **kg** |
| **PAD** | **3.98** | **Z-CMHPG** | **159** | **0** | **0** | **0** | **0** |
| **1** | **3.98** | **Z-CMHPG** | **11.4** | **0.06** | **680** | **2.4** | **27** |
| **2** | **3.98** | **Z-CMHPG** | **11.4** | **0.12** | **1361** | **2.4** | **27** |
| **3** | **3.98** | **Z-CMHPG** | **11.4** | **0.18** | **2041** | **4.8** | **54** |
| **4** | **3.98** | **Z-CMHPG** | **11.4** | **0.24** | **2722** | **4.8** | **54** |
| **5** | **3.98** | **Z-CMHPG** | **11.4** | **0.30** | **3402** | **7.2** | **82** |
| **6** | **3.98** | **Z-CMHPG** | **11.4** | **0.36** | **4082** | **7.2** | **82** |
| **7** | **3.98** | **Z-CMHPG** | **11.4** | **0.42** | **4763** | **9.6** | **109** |
| **8** | **3.98** | **Z-CMHPG** | **11.4** | **0.48** | **5443** | **9.6** | **109** |
| **FLUSH** | **3.98** | **Water** | **46.5** | **0** | **0** | **0** | **0** |

B) The following is a representative job design that would be used for a typical treatment with solid acid precursor beads and an inert masking material. The base fluid is 4.2 g/L of guar crosslinked with boric acid.

| **Stage** | **Rate** | **Base Fluid** | **Stage Volume** | **Solid Acid Precursor Beads** | **Solid Acid Precursor Beads** | **Inert Masking Material** | **Inert Masking Material** |
|---|---|---|---|---|---|---|---|
| | **kL/min** | | **kL** | **kg/L** | **kg** | **kg/L** | **kg** |
| **PAD** | **6.36** | **B-Guar** | **75.7** | **0** | **0** | **0** | **0** |
| **1** | **6.36** | **B-Guar** | **18.9** | **0.06** | **1134** | **0.012** | **227** |
| **2** | **6.36** | **B-Guar** | **18.9** | **0.12** | **2268** | **0.024** | **454** |
| **3** | **6.36** | **B-Guar** | **18.9** | **0.18** | **3402** | **0.036** | **680** |
| **4** | **6.36** | **B-Guar** | **18.9** | **0.24** | **4536** | **0.048** | **907** |
| **5** | **6.36** | **B-Guar** | **18.9** | **0.30** | **5670** | **0.060** | **1134** |
| **6** | **6.36** | **B-Guar** | **18.9** | **0.36** | **6804** | **0.072** | **1361** |
| **7** | **6.36** | **B-Guar** | **18.9** | **0.42** | **7938** | **0.084** | **1588** |
| **8** | **6.36** | **B-Guar** | **18.9** | **0.48** | **9072** | **0.096** | **1814** |
| **FLUSH** | **6.36** | **Water** | **46.5** | **0** | **0** | **0** | **0** |

C) The following is a representative job design that would be used for a typical treatment with solid acid precursor fibers and solid acid precursor beads and an inert masking material. The base fluid is 4.2 g/L of guar crosslinked with boric acid.

| **Stage** | **Rate** | **Base Fluid** | **Stage Vol.** | **Solid Acid Precurs. Beads** | **Solid Acid Precurs. Beads** | **Solid Acid Precurs. Fiber** | **Solid Acid Precurs. Fiber** | **Inert Masking Material** | **Inert Masking Material** |
|---|---|---|---|---|---|---|---|---|---|
| | **kL/min** | | **kL** | **kg/L** | **kg** | **g/L** | **kg** | **kg/L** | **kg** |
| **PAD** | **6.36** | **B-G** | **75.7** | **0** | **0** | **0** | **0** | **0** | **0** |
| **1** | **6.36** | **B-G** | **18.9** | **0.06** | **1134** | **2.4** | **45.4** | **0.012** | **227** |
| **2** | **6.36** | **B-G** | **18.9** | **0.12** | **2268** | **2.4** | **45.4** | **0.024** | **454** |
| **3** | **6.36** | **B-G** | **18.9** | **0.18** | **3402** | **4.8** | **91** | **0.036** | **680** |
| **4** | **6.36** | **B-G** | **18.9** | **0.24** | **4536** | **4.8** | **91** | **0.048** | **907** |
| **5** | **6.36** | **B-G** | **18.9** | **0.30** | **5670** | **7.2** | **136** | **0.060** | **1134** |
| **6** | **6.36** | **B-G** | **18.9** | **0.36** | **6804** | **7.2** | **136** | **0.072** | **1361** |
| **7** | **6.36** | **B-G** | **18.9** | **0.42** | **7938** | **9.6** | **181** | **0.084** | **1588** |
| **8** | **6.36** | **B-G** | **18.9** | **0.48** | **9072** | **9.6** | **181** | **0.096** | **1814** |
| **FLSH** | **6.36** | **Water** | **46.5** | **0** | **0** | **0** | **0** | **0** | **0** |

**Example 3:** A pack that was a mixture of polylactic acid beads and rubber pellets was sandwiched between the ends of two carbonate cores. Both cores were saturated with 2% KCl brine and a small amount of water was added to the pack to reduce the amount of air trapped in the pack. The complete combination of pack and cores was then heated to 135 °C for 4 hours. Upon disassembly, and inspection of the surface of the cores, it was seen that there were areas where the rubber pellets had agglomerated; these areas were not etched but the remainder of the surface was etched.

**Example 4:** Following the same procedure as was used in Example 3 above, two carbonate cores were placed in a cell with polylactic acid beads and water. A hexagonal metal bolt head had been placed between the faces of the two cores. After the polylactic acid beads were hydrolyzed, the cores were inspected. The area where the bolt head had been placed was unaffected by the acid while the rest of the surface was etched.

## Claims

1. A method of creating a fracture in a subterranean formation penetrated by a wellbore comprising:
a) injecting above fracture pressure a fluid comprising particles of one or more than one of a solid acid-precursor, and inert solid particles that are either soft deformable materials or sheet materials or particles having a very large aspect ratio, said inert solid particles being able to conform to one or both faces of said fracture and inhibit reaction of acid with said formation where they conform to a fracture face, and
b) allowing at least a portion of said one or more than one of a solid acid-precursor to hydrolyze.

2. The method of claim 1 wherein said solid acid-precursor is selected from lactide, glycolide, polylactic acid, polyglycolic acid, copolymers of polylactic acid and polyglycolic acid, copolymers of glycolic acid with other hydroxy-, carboxylic acid-, or hydroxycarboxylic acid-containing moieties, copolymers of lactic acid with other hydroxy-, carboxylic acid-, or hydroxycarboxylic acid-containing moieties, and mixtures thereof.

3. The method of any of the preceding claims wherein at least some of said particles of a solid acid-precursor are coated to hinder hydrolysis.

4. The method of any of the preceding claims wherein said inert solid particles are selected from plastic, glass, polyacrylamide, phenol formaldehyde polymer, nylon, wax, natural rubber, synthetic rubber, vermiculite, organic seeds, organic shells, mica, cellophane flakes, starch, rock salt, benzoic acid, metals, naphthalene and mixtures thereof.

5. The method of any of the preceding claims wherein the shapes of at least one of the different types of particles differs from that of the other types of particles.

6. The method of any of the preceding claims wherein the amount of at least one of the different types of particles is varied during injection.

7. The method any of the preceding claims wherein said fluid further comprises an agent capable of dissolving at least one component of said formation selected from hydrochloric acid, formic acid, acetic acid, lactic acid, glycolic acid, sulfamic acid, malic acid, tartaric acid, maleic acid, methylsulfamic acid, chloroacetic acid, aminopolycarboxylic acids, polyaminopolycarboxylic acids, 3-hydroxypropionic acid, salts thereof and mixtures thereof.

8. The method of any of the preceding claims wherein two or more than two solid acid-precursors differ in one or more than one of the properties selected from size, shape, surface area, composition, and hydrolysis rate

9. A composition comprising solid acid-precursor particles, and inert solid particles that are either soft deformable materials or sheet materials or particles having a very large aspect ratio, said inert solid particles being able to conform to one or both faces of a fracture in a subterranean formation and inhibit reaction of acid with said formation where they conform to a fracture face.

## Patentansprüche

1. Verfahren zum Erzeugen einer Zerklüftung in einer unterirdischen Formation, durch die ein Bohrloch verläuft, das umfasst:
a) Einspritzen mit einem Druck über dem Zerklüftungsdruck eines Fluids, das Partikel aus einem oder mehreren festen Säureprecursor und inerten festen Partikeln, die entweder weiche verformbare Materialien oder Schichtmaterialien oder Partikel mit einem sehr großen Schlankheitsverhältnis sind, enthält, wobei sich die inerten festen Partikel an eine oder an beide Flächen der Zerklüftung anpassen und eine Reaktion der Säure mit der Formation dort verhindern können, wo sie sich an eine Zerklüftungsfläche anpassen, und
b) Zulassen, dass wenigstens ein Teil des einen oder der mehreren festen Säureprecursors hydrolysiert.

2. Verfahren nach Anspruch 1, wobei der feste Säureprecursor ausgewählt ist aus Lactid, Glycolid, polylactischer Säure, Polyglycolsäure, Copolymeren aus polylactischer Säure und Polyglycolsäure, Copolymeren aus Glycolsäure mit anderen hydroxy-, carboxylsäure- oder hydroxycarboxylsäure-haltigen Anteilen, Copolymeren aus lactischer Säure mit anderen hydroxy-, carboxylsäure- oder hydroxycarboxylsäure-haltigen Anteilen und Gemischen hiervon.

3. Verfahren nach einem der vorherigen Ansprüche, wobei wenigstens einige der Partikel eines festen Säureprecursors beschichtet sind, um eine Hydrolyse zu verhindern.

4. Verfahren nach einem der vorhergehenden Ansprüche, wobei die inerten festen Partikel ausgewählt sind aus Kunststoff, Glas, Polyacrylamid, Phenolformaldehydpolymer, Nylon, Wachs, Naturkautschuk, synthetischem Kautschuk, Vermiculit, organischen Keimen, organischen Hüllen, Glimmer, Zellophanflocken, Stärke, Steinsalz, Benzoesäure, Metallen, Naphthalen und Gemischen hiervon.

5. Verfahren nach einem der vorhergehenden Ansprüche, wobei sich die Formen wenigstens eines der verschiedenen Typen von Partikeln von jenen der anderen Typen von Partikeln unterscheiden.

6. Verfahren nach einem der vorhergehenden Ansprüche, wobei die Menge wenigstens eines der verschiedenen Typen von Partikeln während des Einspritzens geändert wird.

7. Verfahren nach einem der vorhergehenden Ansprüche, wobei das Fluid ferner ein Mittel enthält, das wenigstens eine Komponente der Formation auflösen kann und gewählt ist aus Salzsäure, Ameisensäure, Essigsäure, lactischer Säure, Glycolsäure, Amidoschwefelsäure, Apfelsäure, Weinsäure, Maleinsäure, Methyl-Amidoschwefelsäure, Chloressigsäure, Aminopolycarboxylsäuren, Polyaminopolycarboxylsäuren, 3-Hydroxypropionsäure, Salzen hiervon und Gemischen hiervon.

8. Verfahren nach einem der vorhergehenden Ansprüche, wobei sich zwei oder mehr feste Säureprecursor in einer oder in mehreren Eigenschaften unterscheiden, die gewählt sind aus Größe, Form, Oberflächeninhalt, Zusammensetzung und Hydrolyserate.

9. Zusammensetzung, die feste Säureprecursor-Partikel und inerte feste Partikel, die entweder weiche verformbare Materialien oder Schichtmaterialien oder Partikel mit einem sehr großen Schlankheitsverhältnis sind, umfasst, wobei sich die inerten festen Partikel an eine oder an beide Flächen einer Zerklüftung in eine unterirdischen Formation anpassen können und eine Reaktion von Säure mit der Formation dort, wo sie sich an eine Zerklüftungsfläche anpassen, verhindern können.

## Revendications

1. Procédé de création d'une fracture dans une formation souterraine pénétrée par un puits de forage, comprenant :
a) l'injection, au-dessus de la pression de fracture, d'un fluide comprenant des particules d'un ou plus d'un précurseur d'acide solide, et des particules solides inertes qui sont soit des matériaux mous déformables soit des matériaux en feuille soit des particules ayant un très grand rapport d'aspect, lesdites particules solides inertes étant aptes à épouser l'une des faces ou les deux de ladite fracture et à inhiber la réaction d'un acide avec ladite formation là où elles épousent une face de fracture, et
b) le fait de laisser au moins une partie dudit un ou plus d'un précurseur d'acide solide s'hydrolyser.

2. Procédé selon la revendication 1, dans lequel ledit précurseur d'acide solide est choisi parmi un lactide, un glycolide, un acide polylactique, un acide polyglycolique, des copolymères d'acide polylactique et d'acide polyglycolique, des copolymères d'acide glycolique avec d'autres groupes contenant un hydroxy, un acide carboxylique, ou un acide hydroxycarboxylique, des copolymères d'acide lactique avec d'autres groupes contenant un hydroxy, un acidee carboxylique ou un acide hydroxycarboxylique, et des mélanges de ceux-ci.

3. Procédé selon l'une quelconque des revendications précédentes, dans lequel au moins certaines desdites particules d'un précurseur d'acide solide sont revêtues pour empêcher l'hydrolyse.

4. Procédé selon l'une quelconque des revendications précédentes, dans lequel lesdites particules solides inertes sont choisies parmi une matière plastique, un verre, un polyacrylamide, un polymère de phénol formaldéhyde, un nylon, une cire, un caoutchouc naturel, un caoutchouc synthétique, la vermiculite, des graines organiques, des coquilles organiques, le mica, les paillettes de cellophane, un amidon, le sel gemme, l'acide benzoïque, les métaux, le naphtalène, et des mélanges de ceux-ci.

5. Procédé selon l'une quelconque des revendications précédentes, dans lequel les formes d'au moins l'une des différentes sortes de particules diffèrent de celles des autres sortes de particules.

6. Procédé selon l'une quelconque des revendications précédentes, dans lequel on fait varier la quantité d'au moins l'une des différentes sortes de particules pendant l'injection.

7. Procédé selon l'une quelconque des revendications précédentes, dans lequel ledit fluide comprend en outre un agent apte à dissoudre au moins un constituant de ladite formation choisi parmi l'acide chlorhydrique, l'acide formique, l'acide acétique, l'acide lactique, l'acide glycolique, l'acide sulfamique, l'acide malique, l'acide tartrique, l'acide maléique, l'acide méthylsulfamique, l'acide chloroacétique, les acides aminopolycarboxyliques, les acides polyaminopolycarboxyliques, l'acide 3-hydroxypropionique, les sels de ceux-ci et des mélanges de ceux-ci.

8. Procédé selon l'une quelconque des revendications précédentes, dans lequel deux ou plus de deux précurseurs d'acide solide diffèrent quant à une ou plus d'une des propriétés choisies parmi la taille, la forme, l'aire de surface, la composition et la vitesse d'hydrolyse.

9. Composition comprenant des particules de précurseur d'acide solide, et des particules solides inertes qui sont soit des matériaux mous déformables soit des matériaux en feuille soit des particules ayant un très grand rapport d'aspect, lesdites particules solides inertes étant aptes à épouser l'une des faces ou les deux d'une fracture dans une formation souterraine et à inhiber la réaction d'un acide avec ladite formation là où elles épousent une face de fracture.
